# EUROPÄISCHE PATENTANMELDUNG

(11) **EP 1 292 074 A2**
(43) Veröffentlichungstag der Anmeldung: **12.03.2003**
(21) Anmeldenummer: 02018864.5
(22) Anmeldetag: 23.08.2002
(51) Int. Cl.: H04L 12/56

(54) **Verfahren zum Zugreifen von Benutzer-Endgeräten auf Zugangsfunknetze für IP-basierte Datenkommunikation**

(30) Priorität: 06.09.2001 DE 10143791
(71) Anmelder: Deutsches Zentrum für Luft- und Raumfahrt e.V., 51147 Köln (DE)
(72) Erfinder: Jahn, Axel, Dr., 82110 Germering (DE); Holzbock, Matthias, Dipl.-Ing., 80807 München (DE)
(74) Vertreter: von Kirschbaum, Albrecht, Dipl.-Ing.

(57) **Zusammenfassung**

Zum Zugreifen von individuell oder kollektiv mobilen Benutzer-Endgeräten (16) auf Zugangsfunknetze (2 bis 5) in einem mehrere verschiedene Zugangsfunknetze, wie z.B. GSM, enthaltenden, heterogenen Zugangsfunknetz (1) zum Zwecke der Durchführung einer auf dem Internet-Protokoll (IP) basierten Anwendungsdatenkommunikation übernimmt eine ein einzelnes Benutzer-Endgerät oder ein Benutzer-Endgerätekollektiv bedienende endgeräteseitige Übergangseinheit (IWU; Interworking Unit) (11) Mobilitätsmanagementaufgaben und dafür sorgt, daß aktive Datenverbindungen beim Wechsel des Benutzer-Endgeräts bzw. des Benutzer-Endgerätekollektivs von einem Zugangsfunknetz zu einem anderen ohne Benutzereingriff aufrechterhalten werden.

Das Verfahren wird beim Zugriff auf IP-basierte Anwendungen in heterogenen Mobilfunk-Zugangsnetzen eingesetzt.

## Beschreibung

Die Erfindung betrifft ein Verfahren zum Zugreifen von Benutzer-Endgeräten, die individuell mobil sind oder einem kollektiv mobilen Benutzernetzwerk (mobiles LAN; mobiles Local Area Network) angehören, auf Zugangsfunknetze in einem mehrere verschiedene Zugangsfunknetze, wie z.B. GSM, enthaltenden, heterogenen Zugangsfunknetz zum Zwecke der Durchführung einer auf dem Internet-Protokoll (IP) basierten Anwendungsdatenkommunikation.

Derzeitige mobile Benutzer-Endgeräte (Terminals) erlauben nur in sehr begrenztem Maße den Zugriff auf unterschiedliche Zugangsfunknetze. Dabei werden z.B. in Mobilfunknetzen sogenannte Dual- oder Triple-Mode-Sprach- und -Datenendgeräte für die unterschiedlichen Netzstandards, wie z.B. GSM und IS-95 oder wie z.B. GSM und Globalstar, angeboten. Ein automatisches, unterbrechungsfreies und benutzerunabhängiges Umschalten zwischen den Netzen ist dabei im Normalfall weder für Sprachdienste noch für Daten möglich.

Zukünftige Mobilfunknetze, wie z.B. UMTS, werden neue Dienste und größere Datenraten ermöglichen. Dabei werden im allgemeinen die Abdeckungszonen der Netze mit steigenden Datenraten immer geringer. Darüber hinaus etabliert sich eine Vielzahl inkompatibler Funknetzstandards, wie z.B. GSM, UMTS, Wireless LAN oder Bluetooth. Mit diesen werden sowohl leitungsvermittelte als auch paketvermittelte Dienste angeboten.

In leitungsvermittelten Systemen, wie z.B. GSM, wird über Einwahlknoten ebenfalls Zugang zu paketvermittelten Netzen, vor allem für IP-Netze, angeboten. Es wird der Trend ersichtlich, immer mehr Diensten das Internet-Protokoll (IP) als Protokoll zu Grunde zu legen, um durch die Paketvermittlung dem mobilen Benutzer "always-on" Anwendungen zu ermöglichen.

Die Identifizierung des teilnehmenden Benutzers geschieht bei IP-Netzen durch die IP-Adresse. Bei herkömmlichen IP-Netzen ist dadurch auch die Lokalisation des Benutzers im topologischen Sinne festgelegt, da Netz-Router die Pakete, die an eine IP-Adresse geschickt werden, allein nach der IP-Adresse weiterleiten. Mittels einer Erweiterung des Internet-Protokolls IP, die mobiles IP (MIP) genannt wird, kann ein Benutzer-Endgerät unabhängig von seinem aktuellen Zugangspunkt erreicht werden. IP und mobiles IP sind derzeit in den Versionen 4 und 6 (IPv4, IPv6) entwickelt.

Mobiles IP unterstützt mobile Benutzer-Endgeräte die von verschiedenen Zugangspunkten aus an das Internet angeschlossen werden, nachdem sie ihren Standort gewechselt haben. Eine weitere Entwicklung ist zellulares IP, das die Bewegung eines Benutzer-Endgerätes innerhalb eines einzelnen Funknetzes erlaubt [J. D. Solomon: "Mobile IP - The Internet Unplugged", Prentice Hall, Upper Saddle River (NJ), 1998].

Bei MIP erhält ein Benutzer-Endgerät, das sich im Heimatnetz nicht an seiner ursprünglichen Lokalität aufhält, eine temporäre IP-Adresse, genannt "Care-of"-Adresse, zugeteilt. Das betreffende Benutzer-Endgerät teilt diese "Care-of"-Adresse einer speziellen Instanz in seinem Heimatnetz, nämlich dem sogenannten "Home Agent" mit, der alle Pakete, die an das betreffende Benutzer-Endgerät gerichtet sind, an die "Care-of"-Adresse weiterleitet.

Allen Kommunikationspartnern, mit denen das betreffende Benutzer-Endgerät kommuniziert, teilt dieses Endgerät nur die IP-Adresse seines Heimatnetzes mit. Wechselt ein Benutzer-Endgerät das Zugangsfunknetz, so wechselt auch seine "Care-of"-IP-Adresse.

Bei MIP und zellularem IP sind allerdings einige Nachteile vorhanden:
- Ein mobiles Benutzer-Endgerät, das während einer aktiven IP-Datenverbindung die Grenze der Abdeckung des verwendeten Zugangsfunknetzes verläßt, muß seine Anschluß(Socket)-Verbindungen der Anwendungsprogramme neu konfigurieren. Eine solche Neukonfiguration wird typischerweise von Anwendungen nicht unterstützt, so daß alle Datenverbindungen und Anwendungen neu gestartet werden müssen.
- Das Heimatnetz (die Firma, der Service-Provider) muß MIP durch Vorsehen eines "Home Agent" unterstützen. MIP ist jedoch nicht weit verbreitet.
- MIP muß auf dem Datenendgerät des teilnehmenden Benutzers installiert sein.

Der Erfindung liegt die Aufgabe zu Grunde, IP-basierte Anwendungen und Datenkommunikation auf allgemein gebräuchlichen Benutzer-Endgeräten über eine Vielzahl von Zugangsfunknetzen eines heterogenen Zugangsfunknetzes zu ermöglichen, so daß der ein Benutzer-Endgerät mitführende Benutzer über die Grenzen der Abdeckungszonen der einzelnen Zugangsfunknetze mobil sein darf, wobei spezielle IP-Protokolle für Mobilität, wie z.B. MIP, dabei auf den Benutzer-Endgeräten vorhanden sein können, aber nicht Voraussetzung sind, da davon auszugehen ist, daß die Mehrzahl der mobilen Benutzer-Endgeräte keine Installation von MIP oder dergleichen aufweist. Ein Wechsel des Zugangsfunknetzes soll automatisch ohne Benutzereingriff initiiert werden, wobei bei einem Wechsel des Zugangsfunknetzes aktive Datenverbindungen aufrechterhalten bleiben sollen.

Diese Aufgabe wird gemäß der Erfindung, die sich auf ein Verfahren der eingangs genannten Art bezieht, dadurch gelöst, daß eine ein einzelnes Benutzer-Endgerät oder ein kollektiv mobiles Benutzernetzwerk bedienende endgeräteseitige Übergangseinheit (IWU; Interworking Unit), die sich zwischen dem Benutzer-Endgerät bzw. mehreren knotenmäßig zusammengefaßten Benutzer-Endgeräten (MN; Mobile Nodes) und den Übertragungseinrichtungen der Zugangsfunknetze befindet, Mobilitätsmanagementaufgaben übernimmt und dafür sorgt, daß aktive Datenverbindungen beim Wechsel des Benutzer-Endgeräts bzw. des kollektiv mobilen Benutzernetzwerkes von einem Zugangsfunknetz zu einem anderen ohne Benutzereingriff aufrechterhalten werden.

Das Verfahren nach der Erfindung, das auf dem Internet-Protokoll (IP) beruhende Anwendungen einzelner mobiler Benutzer oder Benutzer in kollektiv mobilen Netzwerken betrifft, macht einen Wechsel zwischen heterogenen Mobilfunknetzen mit unterschiedlicher Zugangsfunkübertragung und unterschiedlichen Protokollen ohne Unterbrechung einer aktiven Verbindung und ohne Interaktion des Benutzers möglich.

Die Funktion des Mobilitätsmanagement übernimmt gemäß der Erfindung somit die endgeräteseitige Übergangseinheit (IWU). Sie kann ein einzelnes mobiles Benutzer-Endgerät oder mehrere Endgeräte an einem mobilen lokalen Netz (LAN; Local Area Network) bedienen. Die Übergangseinheit (IWU) befindet sich zwischen den Benutzer-Endgeräten (MN; Mobile Nodes) und den Funkübertragungmodems für die Zugangsfunknetze.

Als Zugangsfunknetze können alle paketvermittelnden Standards, wie z.B. GPRS, W-LAN sowie alle leitungsvermittelnden Standards, bei denen Zugang zum IP-Netz über Einwahlknoten gegeben ist, wie z.B. GSM, IS-54, IS-95, verwendet werden. Die Funkanbindung kann über Indoor-Basisstationen, terrestrische Basisstationen oder Satelliten erfolgen.

Die verschiedenen Zugangsfunknetze, wie z.B. GSM, werden in der nachfolgenden Beschreibung des Verfahrens nach der Erfindung auch allgemein als Netzsegmente bezeichnet. Die entsprechenden mobilen Übertragungseinheiten werden als Segmentendgeräte bezeichnet. Diese beinhalten eine übertragungstechnische Komponente, bestehend aus Antenne und Konverter, und ein Modem mit digitaler Datenschnittstelle zum Benutzer-Endgerät.

An die Übergangseinheit (IWU) kann ein individuelles mobiles Benutzer-Endgerät angeschlossen werden. Es lassen sich daran aber auch mehrere Benutzer-Endgeräte anschließen. Werden mehrere Benutzer-Endgeräte angeschlossen, so wird von einem kollektiv mobilen Benutzernetzwerk (kurz: mobiles Benutzer-LAN) gesprochen.

Die Übergangseinheit (IWU) ist in letzerem Fall z.B. in Flugzeugen, Schiffen, Zügen oder Automobilen eingebaut, wobei dann mehrere Benutzer ihre Endgeräte, beispielsweise Laptops, an das lokale Fahrzeug-LAN anschließen können. Dabei können die Benutzer-Endgeräte sowohl fest mit dem kollektiv mobilen Netzwerk, wie z.B. einer Fahrer-Informationseinheit, verbunden sein, als auch zeitweilig in das kollektiv mobile Netzwerk eingebracht werden, wie z.B. der Laptop eines Reisenden.

Vorteilhafte und zweckmäßige Weiterbildungen des Verfahrens nach der Erfindung sind in den Unteransprüchen angegeben, die sich unmittelbar oder mittelbar auf den Patentanspruch 1 beziehen.

Im IP-Netz ist zur Durchführung des Verfahrens nach der Erfindung gleichzeitig ein "Home Agent" (HA) notwendig. Dieser kann von einem beliebigen Internetdienstanabieter (ISP; Internet-Service-Provider) zur Verfügung gestellt werden. Der "Home Agent" (HA) besitzt eine Anzahl von IP-Adressen, die als global lokalisierbare Adressen an Datenendgeräte als "Care-of"-Adressen vergeben werden können. Der "Home Agent" (HA) unterscheidet sich in der Funktionalität nicht von "Home Agents" bei konventionellem MIP, jedoch muß ein Benutzer nicht als normaler lokaler Benutzer im Heimatnetz des "Home Agent" (HA) gemeldet sein.

Ein wesentlicher Gedanke bei der Durchführung des durch die Erfindung vorgeschlagenen Verfahrens liegt darin, daß die endgeräteseitige Übergangseinheit (IWU) für alle angeschlossenen Benutzer-Endgeräte als Server für "Care-of"-IP-Adressen dient, die Netzsegmente anbindet und das Mobilitätsmanagement übernimmt. Die Funktionen von MIP werden von der Übergangseinheit (IWU) und nicht von den Benutzer-Endgeräten ausgeführt. Die "Care-of"-Adressen liegen im Adreßraum des "Home Agent" (HA).

Die Erfindung wird nachfolgend anhand von Zeichnungen erläutert. Es zeigen:
- Fig.1: eine blockschaltbildartige Darstellung eines Beispiels eines mobilen Benutzer-LANs in der Umgebung eines hybriden Zugangsfunknetzes,
- Fig.2: die schematische Darstellung einer Mobilitätsunterstützung für Benutzer-Endgeräte mit DHCPv4 (Dynamic Host Configuration Protocol Version 4),
- Fig.3: die schematische Darstellung einer Mobilitätsunterstützung für Benutzer-Endgeräte mit mobilem IPv4 (Internet Protocol Version 4), und
- Fig.4: die schematische Darstellung einer Mobilitätsunterstützung für Benutzer-Endgeräte mit IPv6 (Internet Protocol Version 6).

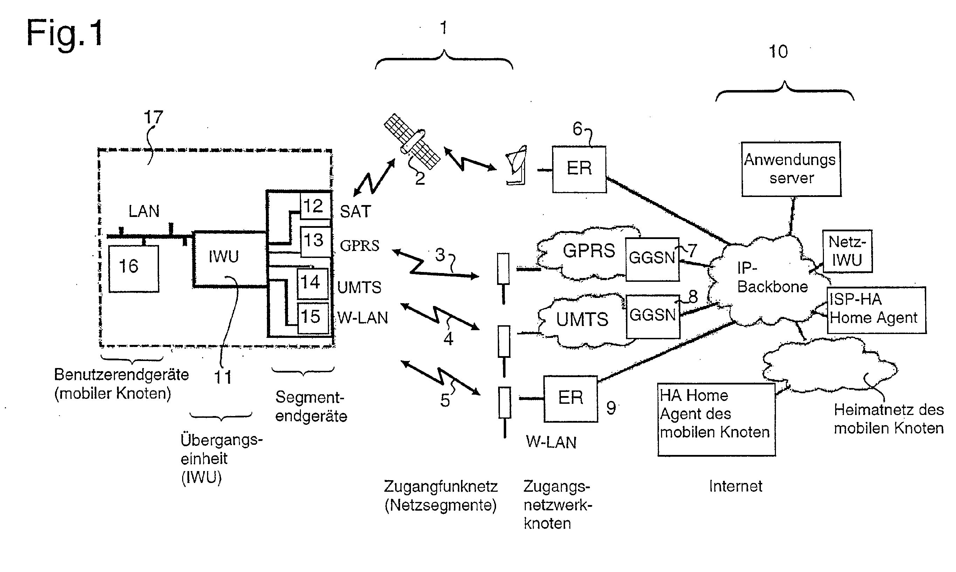

Nachfolgend wird anhand von Fig.1 das Beispiel eines hybriden Zugangsfunknetzes 1 mit mehreren Netzsegmenten 2, 3, 4 und 5 betrachtet. Dabei ist das Netzsegment 2 für Satellitenverbindung, das Netzsegment 3 für GPRS, das Netzsegment 4 für UMTS und das Netzsegment 5 für W-Lan ausgelegt. Diese Netzsegmente 2 bis 5 sind mit sogenannten Zugangsnetzwerkknoten (ER; Edge Router, z. B. im GSM durch Einwahlknoten, im GPRS und UMTS durch das GGSN) 6 bis 9 an das Internet 10 angeschlossen, das in Fig.1 mit IP-Backbone, Anwendungsserver, Netz-Übergangseinheit (Netz-IWU; Netz-Interworking-Unit), Internetdienstanbieter-"Home Agent" ISP-HA, Heimatnetz des mobilen Knotens (MN) und "Home Agent" HA des mobilen Knotens (MN) dargestellt ist.

Eine endgeräteseitige Übergangseinheit (IWU) 11 beinhaltet ein Segmentendgerät oder wie im dargestellten Beispiel mehrere Segmentendgeräte 12 bis 15. Werden wie in dem in Fig.1 dargestellten Beispiel mehrere Segmentendgeräte 12 bis 15 von der Übergangseinheit (IWU) 11 unterstützt, so dient dies zur Steigerung der Ubertragungskapazität. Prinzipiell können ebenso mehrere Netzsegmente des gleichen Typs verwendet werden. Die Segmentendgeräte 12 bis 15, die Übergangseinheit 11 und mehrere Benutzer-Endgeräte 15 befinden sich zusammen auf einer mobilen Plattform 16.

Die endgeräteseitige Übergangseinheit (IWU) 11 stellt alle für die Mobilität der Benutzer-Endgeräte 12 erforderlichen Dienste und Protokolle zur Verfügung. Sie ist damit mobiler Router für das kollektiv mobile LAN-Benutzernetzwerk.

Netzwerkseitig ist sie einem Heimat-Internetdienstanbieter (ISP; Internet Service Provider) zugeordnet. Dieser verwaltet mittels eines aktiven Registers (HA; "Home Agent") ISP-HA den aktuellen Aufenthaltsort der endgeräteseitigen Übergangseinheit (IWU) 11. Dabei ist zu beachten, daß dieser Internetdienstanbieter-"Home Agent" ISP-HA nur der Übergangseinheit (IWU) 11 zugeordnet ist und keinen Einfluß auf die Benutzer-Endgeräte 16 nimmt.

Die endgeräteseitige Übergangseinheit (IWU) 11 untersucht die Verfügbarkeit der Funknetzsegmente 2 bis 5 mittels der Segmentendgeräte 12 bis 15 und registriert sich in jedem einzelnen Netzsegment sofort bei Verfügbarkeit, oder wenn durch ein aktiv werdendes Benutzer-Endgerät 16 die Notwendigkeit besteht. Die endgeräteseitige Übergangseinheit (IWU) 11 kann als HTTP-Server ein Portal zur Verfügung stellen, das für Benutzer eine Registrierung und eine Auswahl bevorzugter Zugangsfunknetze ermöglicht.

Die Übergangseinheit (IWU) 11 dient für die angeschlossenen Datenendgeräte als DHCP(Dynamic Host Configuration Protocol)-Server. Mittels DHCP können die Datenendgeräte eine IP-Adresse beziehen. Die IP-Adresse liegt im Adreßraum des "Home Agent" ISP-HA.

Die endgeräteseitige Übergangseinheit (IWU) 11 dient nicht als Foreign Agent wie bei MIP [vgl. C. Perkins: IP Mobility Support", IETF RFC 2002, Oktober 1996]. Die zugewiesenen Adressen sind nicht von den IP-Adressen abhängig, welche die Übergangseinheit (IWU) 11 für jedes Netzsegment 2 bis 5 bei der Segment-Registrierung von den Zugangsnetzwerkknoten (ER; Edge Router) 6 bis 9 erhält. Auf diese Weise wird die Mobilität der Übergangseinheit (IWU) 11 vor den Datenendgeräten versteckt.

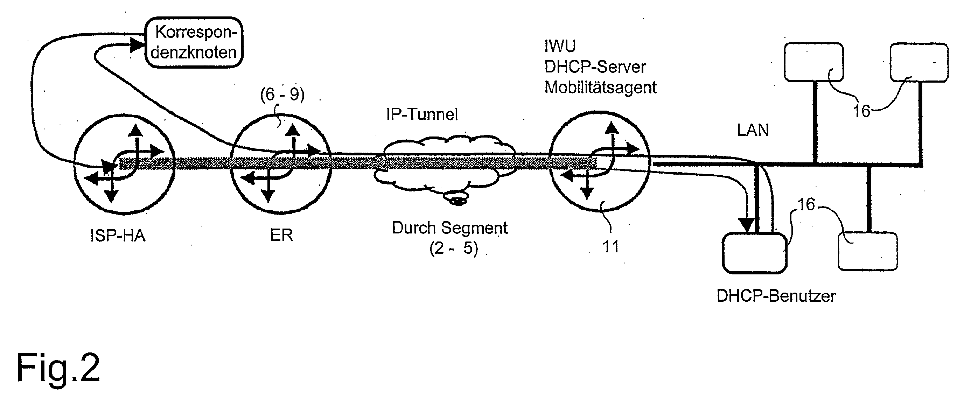

Beim Verfahren nach der Erfindung wird eine Unterstützung von Benutzer-Endgeräten 16, die fest mit dem kollektiv mobilen LAN-Netzwerk verbunden oder zeitweilig in das kollektiv mobile LAN-Netzwerk eingebracht sind, mit flexibler DHCP IPv4 Adressenzuweisung in der anhand von Fig.2 nachfolgend beschriebenen Weise ermöglicht.

Die endgeräteseitige Übergangseinheit (IWU) 11 erhält bei der Registrierung in einem Netzsegment 2 bis 5 die Segment-IP-Adresse Iaddr_{SS}. Diese teilt sie dem Internetdienstanbieter-"Home Agent" ISP-HA mit und fordert für die Benutzer-Endgeräte 16 eine Menge von IPv4-Adressen Iaddr_{ISP,1...n}, die dem Adreßraum des Internetdienstanbieter-"Home Agent" ISP-HA angehören. Diese werden von der Übergangseinheit (IWU) 11 mittels DHCP an die Benutzer-Endgeräte 16 verteilt.

Für jedes Benutzer-Endgerät 16, das über DHCP eine IP-Adresse von der Übergangseinheit (IWU) 11 aus dem Adreßraum des Internetdienstanbieter-"Home Agent" ISP-HA erhalten hat, sendet die Übergangseinheit (IWU) 11 eine Registrierung (Binding Update) zum Internetdienstanbieter-"Home Agent" ISP-HA mit der entsprechenden Segment-IP-Adresse Iaddr_{SS} als "Care-of"-Adresse und einer Benutzer-Endgeräte-Adresse Iadd_{ISP,1...n} als Home-Adresse. Das Benutzer-Endgerät 16 ist nun mit der IP-Adresse Iadd_{ISP,1...n} erreichbar.

Der Internetdienstanbieter-"Home Agent" ISP-HA kapselt alle an eines der Benutzer-Endgeräte 16 gerichteten IP-Pakete mit der IP-Adresse Iaddr_{SS} der Übergangseinheit (IWU) 11 ein und tunnelt diese zur Übergangseinheit (IWU) 11. Die Übergangseinheit (IWU) 11 entfernt diese zusätzliche Kapselung wieder und gibt die Pakete an das entsprechende Benutzer-Endgerät 16 weiter.

Wird das Zugangsfunknetzsegment 2 bis 5 gewechselt, d.h. ändert sich die Adresse Iaddrss der Übergangseinheit (IWU) 11, so wird von der Übergangseinheit (IWU) 11 eine Änderung (Binding Update) dieser IP-Adresse im Internetdienstanbieter-"Home Agent" ISP-HA veranlaßt. Dies bedeutet, daß die "Care-of"-Adresse aller Benutzer-Endgeräte 16 geändert wird. Dabei bleiben aber die IP-Adressen Iadd_{ISP,1...n} der Benutzer-Endgeräte 16 unverändert und somit diese weiterhin mit der gleicher Adresse erreichbar.

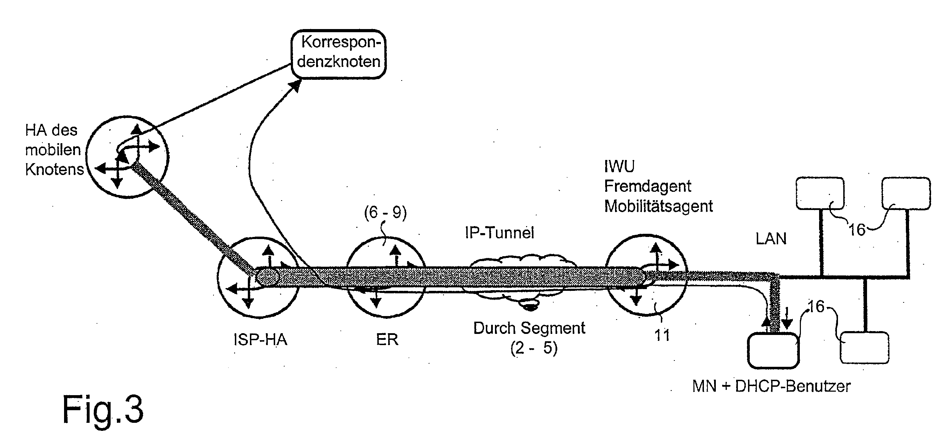

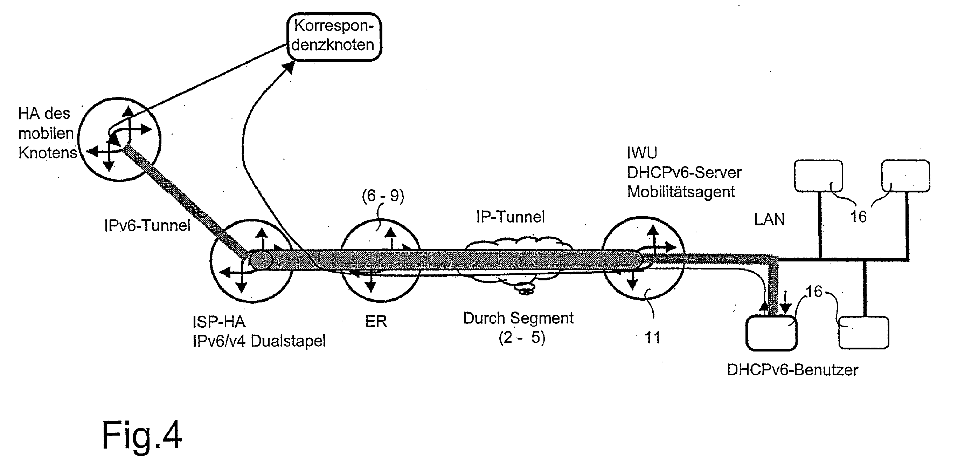

Es werden folgende Möglichkeiten der Endgeräte-Konfiguration unterstützt:
- Fest mit dem kollektiv mobilen LAN-Netzwerk verbundene Benutzer-Endgeräte oder zeitweilig in das kollektiv mobile LAN-Netzwerk eingebrachte Benutzer-Endgeräte 16 ohne MIP mit einer flexiblen Zuweisung (DHCP; Dynamic Host Configuration Protocol) über die Übergangseinheit (IWU) 11 (Verfahren wie vorher anhand Fig.2 erläutert);
- zeitweilig in das kollektiv mobile LAN-Netzwerk eingebrachte Benutzer-Endgeräte 16 mit MIP für IPv4 (Fig.3); und
- zeitweilig in das kollektiv mobile LAN-Netzwerk eingebrachte Benutzer-Endgeräte 16 mit MIP für IPv6 (Fig.4).

Durch das Verfahren nach der Erfindung wird eine Unterstützung von zeitweilig in das kollektiv mobile Netzwerk eingebrachten Benutzer-Endgeräten mit mobilem IPv4 in der anhand von Fig.3 nachfolgend beschriebenen Weise ermöglicht.

Zusätzlich zu dem vorhergehend anhand von Fig.2 beschriebenen Ablauf ist bei der Verwendung von mobilem IPv4 auf den Benutzer-Endgeräten 16 eine zweite Registrierung der IP-Adressen durch das angeschlossene Benutzer-Endgerät 16 und ein zweiter IP-Tunnel nötig, der aber automatisch den Spezifikationen von mobilem IPv4 folgt und nicht durch die Übergangseinheit (IWU) 11 beeinflußt wird. Der Klarheit halber sei dieser Ablauf hier verdeutlicht.

Nachdem das Benutzer-Endgerät 16 eine "Care-of"-Adresse vom der Übergangseinheit (IWU) 11 erhalten hat, registriert es sich mit seiner eigenen Home-Adresse und dieser "Care-of"-Adresse bei seinem "Home Agent" HA. Die IP-Pakete werden dann von diesem "Home Agent" HA und vom Internetdienstanbieter-"Home Agent" ISP-HA gekapselt. Das bedeutet, daß ein IP-Tunnel zwischen Benutzer-Endgeräte-"Home Agent" HA und Benutzer-Endgerät 16 aufgebaut wird, der dann noch einmal zwischen dem Internetdienstanbieter-"Home Agent" ISP-HA und der Übergangseinheit (IWU) 11 getunnelt wird. Dies stellt aber keinerlei Einschränkung der Erreichbarkeit des Benutzer-Endgerätes 11 dar.

Darüber hinaus wird mit dem Verfahren nach der Erfindung eine Unterstützung von zeitweilig in das kollektiv mobile LAN-Netzwerk eingebrachten Benutzer-Endgeräten 16 mit mobilem IPv6 in der anhand von Fig.4 nachfolgend beschriebenen Weise ermöglicht.

Ist das Benutzer-Endgerät 16 für mobiles IPv6 tauglich und wird IPv6 vom jeweiligen Zugangsnetzsegment 2 bis 5 unterstützt, so folgt ein Wechsel des Zugangsnetzsegmentes 2 bis 5 dem mobilen IPv6-Standard. Unterstützt das Zugangsnetzsegment nur IPv4, dann ähnelt der Ablauf den vorgehend anhand von Fig.3 beschriebenen Abläufen, allerdings mit dem Unterschied, daß die Übergangseinheit (IWU) 11 vom Internetdienstanbieter-"Home Agent" ISP-HA einen Pool von IPv6-Adressen anfordert, um die Benutzer-Endgeräte 16 mit mobilem IPv6 zu registrieren. Diese nutzen die IPv6-Adressen zum Eintrag bei ihrem "Home Agent" HA. Ein IPv6 in IPv4-Tunnel wird in diesem Fall vom Internetdienstanbieter-"Home Agent" IPS-HA zur Übergangseinheit (IWU) 11 aufgebaut.

Darüber hinaus kann die endgeräteseitige Übergangseinheit (IWU) mehrere Netzsegmente gleichzeitig aktivieren und Datenverkehr eines oder mehrerer Benutzer-Endgeräte auf mehrere Netzsegmente verteilen, um ein Steigerung der Übertragungskapazität zu erreichen. Dies geschieht, indem die Übergangseinheit (IWU) anhand von Messungen des aktuellen Verkehrs, der von jedem Benutzer-Endgerät verursacht wird, durch "Binding Updates" mit IP-Adressen aus anderen Netzsegmenten den eingehenden Verkehr vom Internetdienstanbieter-"Home Agent" ISP-HA steuert und selbst den ausgehenden Verkehr auf die verschiedenen Netzsegmente steuert.

Mit dem Verfahren nach der Erfindung werden daher folgende Vorteile erzielt:
- die Mobilität der Benutzer ist über die Abdeckungsgrenzen eines einzelnen Zugangsfunknetzes hinaus möglich;
- es entsteht kein Verlust aktiver Verbindungen während des Wechsels des Zugangsnetzwerkes;
- es ist keine Benutzerinteraktion während des Wechsels des Zugangsnetzwerkes notwendig;
- es ist keine Veränderung des Benutzer-Endgerätes notwendig, die über die Einstellung einer auf den DHCP-Server bezogenen IP-Adresse, wie sie für die Einwahl zu einem Internet Service Provider üblich ist, hinausgeht; und
- es werden Benutzer-Endgeräte unterstützt, unabhängig von der Unterstützung von IP oder MIP in Version 4 oder 6.

### Bezugszeichenliste

- 1: Hybrides Zugangsfunknetz
- 2 bis 5: Netzsegmente
- 6 bis 9: Zugangsnetzwerkknoten (ER; Edge Router)
- 10: Internet
- 11: Übergangseinheit (IWU; Interworking Unit)
- 12 bis 15: Segmentendgeräte
- 16: Benutzer-Endgeräte
- 17: Mobile Plattform mit LAN
- HA: "Home Agent"
- ISP-HA: Internetdienstanbieter-"Home Agent"

## Patentansprüche

1. Verfahren zum Zugreifen von Benutzer-Endgeräten, die individuell mobil sind oder einem kollektiv mobilen Benutzernetzwerk (mobiles LAN; mobiles Local Area Network) angehören, auf Zugangsfunknetze in einem mehrere verschiedene Zugangsfunknetze, wie z.B. GSM, enthaltenden, heterogenen Zugangsfunknetz zum Zwecke der Durchführung einer auf dem Internet-Protokoll (IP) basierten Anwendungsdatenkommunikation, **dadurch gekennzeichnet, daß** eine ein einzelnes Benutzer-Endgerät oder ein kollektiv mobiles Benutzernetzwerk bedienende endgeräteseitige Übergangseinheit (IWU; Interworking Unit), die sich zwischen dem Benutzer-Endgerät bzw. mehreren knotenmäßig zusammengefaßten Benutzer-Endgeräten (MN; Mobile Nodes) und den Übertragungseinrichtungen der Zugangsfunknetze befindet, Mobilitätsmanagementaufgaben übernimmt und dafür sorgt, daß aktive Datenverbindungen beim Wechsel des Benutzer-Endgeräts bzw. des kollektiv mobilen Benutzernetzwerkes von einem Zugangsfunknetz zu einem anderen ohne Benutzereingriff aufrechterhalten werden.

2. Verfahren nach Anspruch 1, **dadurch gekennzeichnet, daß** die das Mobilitätsmanagement übernehmende Übergangseinheit (IWU) für alle an sie angeschlossenen Benutzer-Endgeräte als Server für temporäre IP-Adressen dient, die als "Care-of"-Adressen bezeichnet werden und von einem durch einen Internetdienstanbieter, d.h. einem Internet Service Provider, dem sie zugeordnet ist, zur Verfügung gestellten "Home Agent" vergeben werden, alle für die Mobilität der Benutzer-Endgeräte erforderlichen Dienste und Protokolle zur Verfügung stellt und die Zugangsfunknetze an die Benutzer-Endgeräte anbindet.

3. Verfahren nach Anspruch 1 oder 2, **dadurch gekennzeichnet, daß** zum Aufteilen des Benutzerverkehrs auf mehrere Zugangsfunknetze die endgeräteseitige Übergangseinheit (IWU) zur Erhöhung der Übertragungskapazität mehrere Zugangsfunknetze gleichzeitig verwendet.

4. Verfahren nach Anspruch 3, **dadurch gekennzeichnet, daß** die endgeräteseitige Übergangseinheit (IWU) aufgrund von Messungen mittels Registrierungen, d.h. sogenannten "Binding Updates", die an den "Home Agent" des jeweiligen Internetdienstanbieters gesendet werden, den Verkehr über mehrere Zugangsfunknetze regulieren kann.

5. Verfahren nach einem der vorhergehenden Ansprüche, **dadurch gekennzeichnet, daß** zur Unterstützung von Mobilität für die Internet-Protokolle IPv4 und IPv6 die Übergangseinheit (IWU) IP-Adressen aus IPv4- bzw. IPv6-Adreßraum bereitstellt.

6. Verfahren nach einem der vorhergehenden Ansprüche, **dadurch gekennzeichnet, daß** zur leichteren Konfiguration des mobilen Internet-Protokolls (MIP) auf Benutzer-Endgeräten die Übergangseinheit (IWU) die Mobilität vor den Benutzer-Endgeräten durch unveränderliche IP-Adressen aus dem Adreßraum des Internetdienstanbieter-"Home Agent" (ISP-HA) versteckt.

7. Verfahren nach Anspruch 1, **dadurch gekennzeichnet, daß** die Übergangseinheit (IWU) alle zur Unterstützung von Benutzer-Endgeräten mit IP und mobilem IP der Versionen 4 und 6 benötigten Funktionen übernimmt und mittels IP-Tunnel zwischen dem Internetdienstanbieter-"Home Agent" (ISP-HA) und der Übergangseinheit (IWU) einen Wechsel des Zugangsfunknetzes zuläßt, der für die Benutzer-Endgeräte transparent ist.

8. Verfahren nach einem der vorhergehenden Ansprüche, **dadurch gekennzeichnet, daß** die Übergangseinheit (IWU) mittels Segmentendgeräten, d.h. mobilen Übertragungseinheiten mit digitaler Datenschnittstelle zum Benutzer-Endgerät, die Verfügbarkeit von Zugangsfunknetzen testet und aufgrund von Feldstärkemessungen und/oder Übertragungsgüteparametern einen Wechsel des verwendeten Zugangsfunknetzes veranlaßt, wobei bei gleichzeitiger Verfügbarkeit mehrerer Zugangsfunknetze in Abhängigkeit von Kosten und Leistung der betreffenden Zugangsfunknetze und den Benutzerprofilen ein oder mehrere Zugangsfunknetze verwendet werden.

9. Verfahren nach einem der vorhergehenden Ansprüche, **dadurch gekennzeichnet, daß** die Übergangseinheit (IWU) ein Benutzerportal zur Verfügung stellt, das dem Benutzer an seinem Benutzer-Endgerät eine Auswahl bevorzugter Zugangsfunknetze abhängig von Kosten und Leistung der Zugangsfunknetze erlaubt und somit sein Benutzerprofil einstellen läßt.
